# EUROPÄISCHE PATENTSCHRIFT

(11) **EP 1 103 330 B1**
(45) Veröffentlichungstag und Bekanntmachung des Hinweises auf die Patenterteilung: **02.01.2004**
(21) Anmeldenummer: 99117314.7
(22) Anmeldetag: 03.09.1999
(51) Int. Cl.: B23K 10/00

(54) **Schweiss- oder Plasmaschneidgerät und Verfahren zum Betreiben eines Schweiss- oder Plasmaschneidgerätes**
Welding or plasma cutting device and method for operation a welding or plasma cutting device
Appareil de coupage ou de soudage au plasma et méthode pour faire fonctionner un appareil de coupage ou de soudage au plasma

(43) Veröffentlichungstag der Anmeldung: 30.05.2001
(73) Patentinhaber: EWM Hightec Welding GmbH, 56271 Mündersbach (DE)
(72) Erfinder: Siebel, Henrik, 57223 Kreuztal (DE)
(74) Vertreter: COHAUSZ & FLORACK

(56) Entgegenhaltungen:
- EP-A- 0 410 088
- US-A- 5 650 079
- US-A- 5 864 110
- PATENT ABSTRACTS OF JAPAN vol. 1999, no. 5, 31. Mai 1999 (1999-05-31) & JP 11 033719 A (DAIHEN CORP), 9. Februar 1999 (1999-02-09)

## Beschreibung

Die Erfindung betrifft ein Schweiß- oder Plasmaschneidgerät bestehend aus einem von einem Dreiphasennetz speisbaren, von einer Steuereinrichtung getakteten Gleichrichter, dessen Brückenzweige jeweils separat derart von der Steuereinrichtung ansteuerbare Halbleiterschalter und dazu parallel geschaltete Leistungsdioden aufweisen, daß im Wechselspannungseingang des Gleichrichters sinusförmige Ströme fließen und die Zwischenkreisspannung auf einem konstanten Wert gehalten wird, wobei der Gleichrichter über einen Kommutierungsvierpol mit einem kapazitiven Zwischenkreis verbunden ist, welcher zur Versorgung einer Schweißstromquelle für den Strom des Schweißprozesses dient. Darüber hinaus betrifft die Erfindung ein Verfahren zum Betrieb eines solchen Schweißgerätes.

Die Erfindung betrifft ein Verfahren zum Betrieben ein Schweiß- oder Plasmaschneidgerätes gemäß dem Oberbegriff des Anspruchs 9 (siehe z.B. EP-A-0 410 088).

Ein Schweiß- oder Plasmaschneidgerät der eingangs genannten Art ist aus der EP 0 410 088 bzw. der DE 42 11 906 bekannt. Bei diesem bekannten Schweißgerät wird durch die Taktung der Halbleiterschalter in den Diodenbrückenzweigen der aktiven Gleichrichteranordnung sowie durch eine entsprechende Variation der Pulsbreite sowohl der Strom im Wechselspannungseingang als auch auf die Gleichspannung am Gleichrichterausgang eingewirkt. Hierdurch wird die Zwischenkreisspannung stabilisiert und die in den Wechselspannungseingang des Gleichrichters fließenden Ströme sind idealerweise sinusförmig. Hierzu sind in der Steuereinheit Regelkreise für den Wechselstrom und/oder die Zwischenkreisgleichspannung vorgesehen, die über eine Meßeinrichtung erfaßt werden. Nachteilig bei der bekannten Schaltung ist, daß eine hohe Taktfrequenz für die Halbleiterschalter gewählt werden muß, um die Baugröße für die Eingangsdrosseln des Gleichrichters klein zu halten. Aufgrund dessen tritt eine verstärkte Schaltverlustleistung in den Halbleitern auf, welche den Wirkungsgrad des Gleichrichters verschlechtert und dadurch den Einsatz von größer dimensionierten Halbleiterbauelementen erfordert.

Der Erfindung liegt davon ausgehend die Aufgabe zugrunde, die bekannte Vorrichtung dahingehend zu verbessern, daß die Schaltverlustleistung in den Leistungshalbleitern signifikant herabgesetzt wird.

Diese Aufgabe wird erfindungsgemäß bei einem Schweißoder Plasmaschneidgerät der eingangs genannten Art dadurch gelöst, daß kapazitive Energiespeichermittel (CB1-CB6) jeweils parallel zu den steuerbaren Halbleiterschaltern (SB1-SB6) des Gleichrichters angeordnet sind, daß der Kommutierung der Gleichrichterausgangsspannung (V_{B}) von der Zwischenkreisspannung (V₀), der Kommutierungsvierpol Entkopplungsmittel zur Entkopplung der Gleichrichterausgangsspannung von der Zwischenkreisspannung, einen von der Steuereinrichtung getaktet ansteuerbaren induktiven Energiespeicher und einen mit dem ansteuerbaren induktiven Energiespeicher gekoppelten Entlastungspfad aufweist derart, daß in einer ersten Betriebsphase des Kommutierungsvierpols die Gleichrichterausgangsspannung durch Aktivierung des induktiven Energiespeichers zu Null geführt wird, woraufhin das von der Steuereinrichtung gesteuerte Einschalten der Halbleiterschalter des Gleichrichters spannungslos erfolgt, und daß in einer zweiten Betriebsphase des Kommutierungsvierpols die Energie des induktiven Energiespeichers über einen quasi-resonanten Umladevorgang entlang des Entlastungspfades in die kapazitiven Energiespeichermittel überführt wird, die wiederum ein "weiches" Ausschalten der Leistungshalbleiter ermöglichen.

Ein Verfahren gemäß der Erfindung ist im Anspruch 9 definiert.

Die Erfindung zeichnet sich dadurch aus, daß die Leistungsschalter der Gleichrichterbrücke stets nur in einem solchen zeitlichen Intervall eingeschaltet werden, in welchem die Spannung am Ausgang des Gleichrichters zu Null gesetzt ist, so daß entsprechende Schaltungsverluste vermieden werden. Darüber hinaus erfolgt durch die kapazitiven Energiespeichermittel auch das Ausschalten der Leistungsschalter "weicher".

Die im geschlossenen Zustand der Leistungsschalter im induktiven Energiespeicher gespeicherte Energie wird während des Zeitintervalls vor dem Öffnen des Schalters in den kapazitiven Energiespeicher verschoben. Darüber hinaus wird auch der im Kommutierungsvierpol vorgesehene weitere steuerbare Schalter nur im Status Strom gleich Null eingeschaltet und wiederum energiemäßig über eine im Netzwerk enthaltene Kapazität entlastet (weich) ausgeschaltet. Die beschriebenen Maßnahmen haben eine erhebliche Reduzierung der Schaltverluste zur Folge, wodurch der Wirkungsgrad des Gleichrichters deutlich erhöht wird und der Einsatz von kleiner dimensionierten Halbleiterbauelementen ermöglicht wird.

Durch die erfindungsgemäße Lösung lassen sich also bei deutlich reduzierten Schaltverlusten die Vorteile der bekannten Schaltung erhalten, die darin bestehen, daß in den Wechselspannungseingängen des Gleichrichters nahezu sinusförmige Ströme fließen und die Zwischenkreisspannung auch bei variabler Netzspannung konstant gehalten wird.

Bevorzugte Ausführungsformen der Erfindung gehen aus den Unteransprüchen hervor.

Die Erfindung wird im folgenden anhand einer ein Ausführungsbeispiel darstellenden Zeichnung näher erläutert. Dabei zeigen:
- Fig. 1: ein Schaltungsdiagramm für ein Ausführungsbeispiel eines erfindungsgemäßen Schweiß- oder Plasmaschneidgerätes
- Fig. 2: Darstellungen von Strom- bzw. Spannungsverläufen zur Erläuterung der Funktionsweise der in Fig. 1 dargestellten Schaltung
- Fig. 3a,3b,3c: auszugsweise Darstellungen der Schaltungen nach Fig. 1 jeweils zu unterschiedlichen Zeitpunkten T0 bis T7 der Strom-/ Spannungsverläufe gemäß Fig. 2.

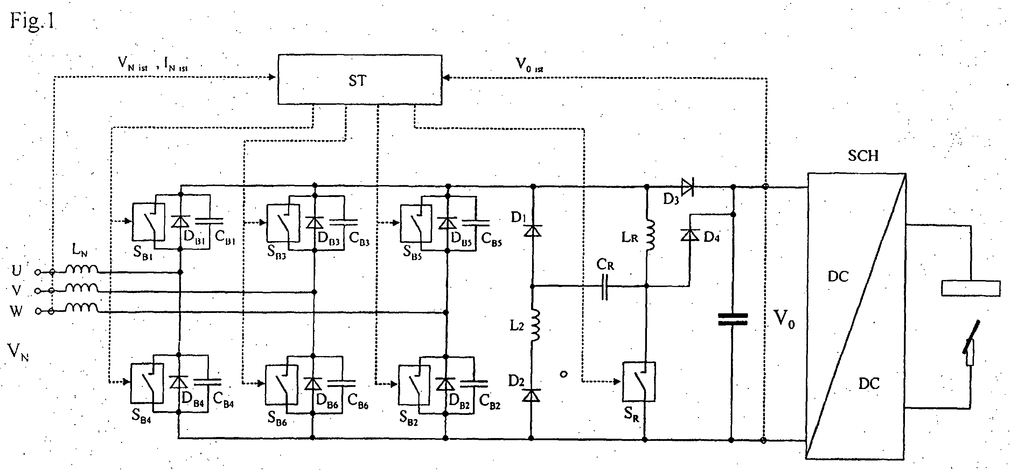

Figur 1 zeigt den Schaltungsaufbau eines Ausführungsbeispieles für ein erfindungsgemäßes Schweißgerät. Die Schaltung besteht aus einem von einem Dreiphasennetz UVW über Eingangsdrosseln L_{N} gespeisten Gleichrichter, wobei die Eingangsdrosseln L_{N} vorzugsweise von Netzinduktivitäten gebildet werden, welcher aus sechs Brückenzweigen besteht. In den Brückenzweigen sind jeweils parallel zueinander angeordnet Halbleiterschalter S_{B1}-S_{B6}, Dioden D_{B1}-D_{B6} und Kondensatoren C_{B1}-C_{B6}. Die Halbleiterschalter S_{B1}-S_{B6} sind steuerbar von einer Steuereinrichtung ST, welche als Eingangssignal die jeweiligen Ist-Werte der Eingangsspannung V_{Nist} und des Eingangsstromes I_{Nist} des Dreiphasennetzes UVW erhält.

Am Ausgang des Gleichrichters ist ein Kommutierungsvierpol angeordnet, welcher aus den Dioden D₁-D₄, den Induktivitäten L₂,L_{R}, dem weiteren Kondensator C_{R} und einem weiteren steuerbaren Halbleiterschalter S_{R} besteht. Der weitere steuerbare Halbleiterschalter S_{R} ist ebenfalls von der Steuereinrichtung ST ansteuerbar.

Der Kommutierungsvierpol besteht aus zwei Querzweigen, von den der eine Querzweig durch eine Reihenschaltung aus der Induktivität L_{R} und dem weiteren Steuerschalter S_{R} gebildet ist. Der weitere Querzweig des Kommutierungsvierpols wird durch die Reihenschaltung aus den zwei Dioden D₁, D₂ und der zur zweiten Diode D₂ in Reihe angeordneten Induktivität L₂ gebildet. Die beiden Querzweige sind über den weiteren Kondensator C_{R} direkt miteinander verbunden, wobei die Mittelanzapfung der durch die Induktivität L_{R} und den Halbleiterschalter S_{R} gebildeten Reihenschaltung über eine Kopplungsdiode D₄ mit einem dem Kommutierungsvierpol nachgeordneten Zwischenkreiskondensator verbunden ist. Am Ausgang des Zwischenkreises liegt die Zwischenkreisspannung V₀ an, die ebenfalls von der Steuereinrichtung ST erfaßt wird. Vom Zwischenkreis wird eine Schweißstromquelle SCH mit elektrischer Energie versorgt, welche den Strom für den Schweißprozeß liefert.

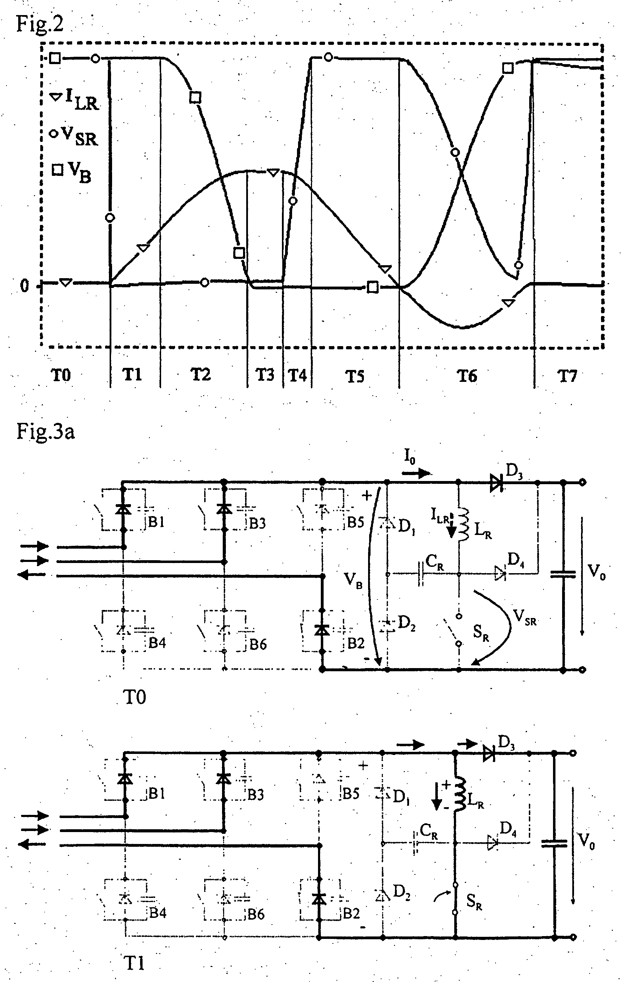

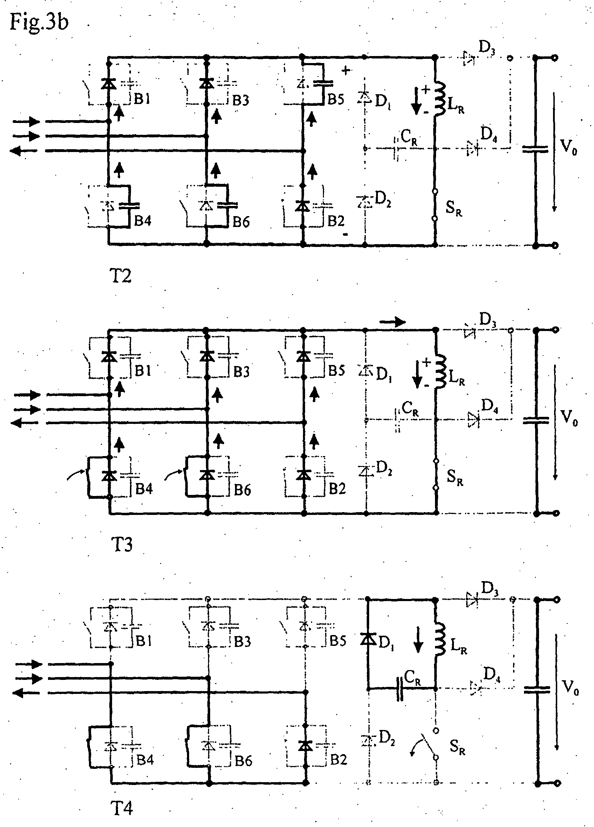

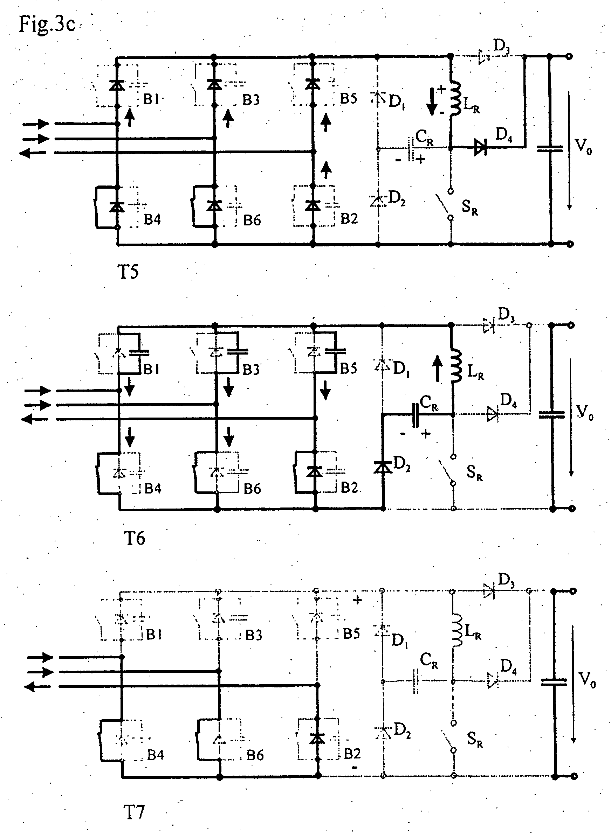

Die Funktion der soeben beschriebenen Schaltung wird anhand der zeitlichen Strom- bzw. Spannungsverläufe in Figur 2 und den Abbildungen nach Figur 3a im folgenden näher erläutert.

Fig. 2 zeigt zeitliche Stromverläufe, jeweils in unterschiedliche Zeitintervalle T0-T7 unterteilt, für die am Ausgang des Gleichrichters liegende Gleichrichterausgangsspannung V_{B}, für den durch die Induktivität L_{R} fließenden Strom I_{LR} und die über dem weiteren steuerbaren Halbleiterschalter S_{R} anliegende Spannung V_{SR}.

Die Figuren 3a bis 3c enthalten jeweils den Zeitabschnitten T0-T7 zugeordnete Funktionsdarstellungen, um die Betriebsweise der Schaltung zu erläutern:

Es wird zunächst angenommen, daß zum Zeitpunkt T0 der Strom in den Phasen U und V positiv und in der Phase W negativ ist. Dann ist der Gleichrichter so gesteuert, daß der Schalter S_{B2} ständig geschlossen ist, so daß die Phase W ständig mit dem negativen Potential des Zwischenkreises verbunden ist. In den Phasen U und V wird das Verfahren der Pulsbreitenmodulation angewendet, indem die Schalter S_{B4} und S_{B6} von der Steuereinrichtung ST getaktet werden. Durch einen im folgenden näher beschriebenen Quasi-Resonanzzyklus wird die Ausgangsspannung V_{B} der Gleichrichterbrücke kurzzeitig zu Null gebracht, so daß in diesem Zeitpunkt die beiden Schalter S_{B4} und S_{B6} im spannungsfreien Zustand eingeschaltet werden können. Entsprechend dem Tastverhältnis der Pulsbreitenmodulation können anschließend die Schalter S_{B4} und S_{B6} wieder geöffnet werden, wobei dies erfindungsgemäß in einer im folgenden näher dargestellten Art und Weise "schaltentlastet" erfolgt.

Zunächst ist der Ausgangszustand zum Zeitpunkt T0 so gewählt, daß der Strom über die Dioden D_{B1},D_{B3} und D_{B2} vom Dreiphasennetz in den Gleichspannungskreis fließt. Dabei entspricht die Gleichrichterausgangsspannung V_{B} dem Wert der Zwischenkreisspannung V₀.

Durch Schließen des steuerbaren Halbleiterschalters S_{R} zu Beginn des Zeitintervalls T1 wird in der Induktivität L_{R} ein Strom aufgebaut. Der Strom in der Diode D₃ nimmt in gleicher Weise ab.

Zu Beginn des Zeitintervalls T2 ist der Strom durch die Induktivität L_{R} größer als der Netzstrom I₀, so daß die Diode D₃ stromlos wird und die Brückenkondensatoren C_{B4},C_{B5} und C_{B6} entladen werden.

Während des Zeitintervalls T3 sind dann sämtliche Kondensatoren C_{B1} bis C_{B6} der Gleichrichterbrücke vollständig entladen, d.h. daß die Gleichrichterausgangsspannung V_{B} zu Null geworden ist. Dann können die Schalter S_{B4} und S_{B6} bei der Spannung Null eingeschaltet werden und der Strom durch die Induktivität L_{R} fließt weiter über die Gleichrichterdioden D_{B1} bis D_{B6}.

Zu Beginn des Zeitintervalls T4 wird der Schalter S_{R} wieder geöffnet und der Kondensator C_{R} wird vom Strom I_{LR}, der zu diesem Zeitpunkt maximal ist, solange geladen, bis er auf die Zwischenkreisspannung V₀ aufgeladen ist. Gleichzeitig wird der Netzstrom in der Gleichrichterbrücke im Freilaufbetrieb kurzgeschlossen.

Zu Beginn des Zeitintervalls T5 fließt der Strom I_{LR} durch die Induktivität L_{R} weiter über die Diode D₄ in den Zwischenkreis und wird dort abgebaut. Dadurch wird gleichzeitig die am weiteren Halbleiterschalter S_{R} anliegende maximale Sperrspannung auf die Zwischenkreisspannung V₀ begrenzt.

Zu Beginn des Zeitintervalls T6 fließt in der Art eines quasi-resonanten Umschwingvorganges die Ladung des weiteren Kondensators CR zurück in die Gleichrichterbrücke, wobei der Kodensator C_{R} entladen wird und die Kondensatoren C_{B1},C_{B3} und C_{B5} der Gleichrichterbrücke bis auf die Zwischenkreisspannung V₀ aufgeladen werden.

Schließlich ist zu Beginn des Zeitintervalls T7 der Zustand des Zeitintervalls T0 erreicht, wobei der Netzstrom durch die Halbleiterschalter S_{B4},S_{B6} und die Diode D_{B2} kurzgeschlossen ist. Durch die oben beschriebenen Maßnahmen wird also ermöglicht, daß die Halbleiterschalter der Gleichrichterbrücke, die entsprechend den Vorgaben der Steuereinrichtung ST zu schließen sind, ausschließlich bei der Spannung Null geschlossen werden. Umgekehrt erfolgt ein Öffnen der Schalter aufgrund des beschriebenen Energieumladeverhaltens durch die jedem Schalter des Gleichrichters parallel angeordneten Kondensatoren in einer schaltentlasteten Art und Weise.

## Patentansprüche

1. Schweiß- oder Plasmaschneidgerät bestehend aus einem von einem Dreiphasennetz (U,V,W) speisbaren, von einer Steuereinrichtung (ST) getakteten Gleichrichter, dessen Brückenzweige jeweils separat derart von der Steuereinrichtung (ST) ansteuerbare Halbleiterschalter (S_{B1}-S_{B6}) und dazu parallel geschaltete Leistungsdioden (D_{B1}-D_{B6}) aufweisen, daß im Wechselspannungseingang des Gleichrichters sinusförmige Ströme fließen und die Zwischenkreisspannung (V₀) auf einem konstanten Wert gehalten wird, wobei der Gleichrichter über einen Kommutierungsvierpol mit einem kapazitiven Zwischenkreis verbunden ist, welcher zur Versorgung einer Schweißstromquelle (SCH) für den Strom des Schweißprozesses dient,
**dadurch gekennzeichnet, daß** kapazitive Energiespeichermittel (CB1-CB6) jeweils parallel zu den steuerbaren Halbleiterschaltern (SB1-SB6) des Gleichrichters angeordnet sind, daß der Kommutierung der Gleichrichterausgangsspannung (V_{B}) von der Zwischenkreisspannung (V₀), einen von der Steuereinrichtung (ST) getaktet ansteuerbaren induktiven Energiespeicher (L_{R}, S_{R}) und einen mit dem ansteuerbaren induktiven Energiespeicher gekoppelten Entlastungspfad (C_{R},D₁,D₂,D₄) aufweist derart, daß in einer ersten Betriebsphase des Kommutierungsvierpols die Gleichrichterausgangsspannung (V_{B}) durch Aktivierung des induktiven Energiespeichers (L_{R}) zu Null geführt wird, woraufhin das von der Steuereinrichtung (ST) gesteuerte Einschalten der Halbleiterschalter (S_{B1}-S_{B6}) des Gleichrichters spannungslos erfolgt, und daß in einer zweiten Betriebsphase des Kommutierungsvierpols die Energie des induktiven Energiespeichers (L_{R}) über einen quasi-resonanten Umladevorgang entlang des Entlastungspfades (C_{R},D₁,D₂,D₄) in die kapazitiven Energiespeichermittel (C_{B1}-C_{B6}) überführt wird, die wiederum ein "weiches" Ausschalten der Leistungshalbleiter (S_{B1}-S_{B6}) ermöglichen.

2. Schweiß- oder Plasmaschneidgerät nach Anspruch 1,
**dadurch gekennzeichnet, daß** die Entkopplungsmittel mindestens eine Entkopplungsdiode (D₃) aufweisen.

3. Schweiß- oder Plasmaschneidgerät nach Anspruch 1 oder 2,
**dadurch gekennzeichnet, daß** der ansteuerbare induktive Energiespeicher durch die Reihenschaltung aus einem gesteuerten Halbleiterschalter (S_{R}) und einer Induktivität (L_{R}) gebildet wird.

4. Schweiß- oder Plasmaschneidgerät nach Anspruch 3,
**dadurch gekennzeichnet, daß** die Reihenschaltung in einem Querzweig des Kommutierungsvierpols angeordnet ist.

5. Schweiß- oder Plasmaschneidgerät nach einem der vorhergehenden Ansprüche,
**dadurch gekennzeichnet, daß** die kapazitiven Energiespeichermittel durch jeweils parallel zu den steuerbaren Halbleiterschaltern (S_{B1}-S_{B6}) des Gleichrichters angeordnete Kondensatoren (C_{B1}-C_{B6}) gebildet sind.

6. Schweiß- oder Plasmaschneidgerät nach einem der vorhergehenden Ansprüche,
**dadurch gekennzeichnet, daß** der Entlastungspfad durch mindestens zwei in einem weiteren Querzweig des Kommutierungsvierpols liegende Dioden (D₁, D₂) sowie durch einen zwischen dem gemeinsamen Anschlußpunkt der Dioden und dem gemeinsamen Anschlußpunkt von Halbleiterschalter (S_{R}) und Induktivität (L_{R}) angeordneten Kondensator (C_{R}) gebildet ist.

7. Schweiß- oder Plasmaschneidgerät nach Anspruch 6,
**dadurch gekennzeichnet, daß** der Kondensator (C_{R}) über eine Kopplungsdiode (D₄) mit dem Zwischenkreis verbunden ist.

8. Schweiß- oder Plasmaschneidgerät nach einem der vorhergehenden Ansprüche,
**dadurch gekennzeichnet, daß** in Reihe zu einer der mindestens zwei Dioden (D₂,D₁) eine weitere Induktivität (L₂) angeordnet ist.

9. Verfahren zum Betreiben eines Schweiß- oder Plasmaschneidgerätes bestehend aus einem von einem Dreiphasennetz (U,V,W) gespeisten, von einer Steuereinrichtung (ST) getakteten Gleichrichter, dessen ansteuerbare Halbleiterschalter (S_{B1}-S_{B6}) und dazu parallel geschaltete Leistungsdioden (D_{B1}-D_{B6}) aufweisende Brückenzweige jeweils separat derart getaktet werden, daß im Wechselspannungseingang des Gleichrichters sinusförmige Ströme fließen und die Zwischenkreisspannung (V₀) auf einem konstanten Wert gehalten wird, wobei der Gleichrichter über einen Kommutierungsvierpol mit einem kapazitiven Zwischenkreis verbunden ist, welcher zur Versorgung einer Schweißstromquelle (SCH) für den Strom des Schweißprozesses dient,
**dadurch gekennzeichnet, daß** in einer ersten Betriebsphase des vom Zwischenkreis über eine Diode (D₃) entkoppelten Kommutierungsvierpols die Gleichrichterausgangsspannung (V_{B}) durch Aktivierung eines getakteten ansteuerbaren induktiven Energiespeichers (L_{R}) zu Null geführt wird, woraufhin das von der Steuereinrichtung (ST) gesteuerte Einschalten der Halbleiterschalter (S_{B1}-S_{B6}) des Gleichrichters spannungslos erfolgt, und daß in einer zweiten Betriebsphase des Kommutierungsvierpols die Energie des induktiven Energiespeichers (L_{R}) über einen quasi-resonanten Umladevorgang entlang eines Entlastungspfades (C_{R},D₁,D₂,D₄) in jeweils parallel zu den steuerbaren Halbleiterschaltern (SB1-SB6) des Gleichrichters angeordnete kapazitive Energiespeichermittel (C_{B1}-C_{B6}) überführt wird, die wiederum ein "weiches" Ausschalten der Leistungsschalter (S_{B1}-S_{B6}) ermöglichen.

## Claims

1. A welding or plasma cutting apparatus comprising a rectifier that can be powered by a three-phase network (U, V, W) and is clocked by a control unit (ST), wherein the bridge arms of said rectifier respectively contain separate semiconductor switches (S_{B1}-S_{B6}) that can be controlled by the control unit (ST) , as well as power diodes (D_{B1}-D_{B6}) that are parallel connected to the semiconductor switches, such that sinusoidal currents flow in the a.c. voltage input of the rectifier and the intermediate circuit voltage (V₀) is maintained at a constant value, and wherein a commutation quadrupole connects the rectifier to a capacitive intermediate circuit that serves for supplying a welding current source (SCH) for the current of the welding process,
**characterized in that**
capacitive energy storage means (C_{B1}-C_{B6}) are respectively arranged parallel to the controllable semiconductor switches (S_{B1}-S_{B6}) of the rectifier, **in that**, in order to commutate the rectifier output voltage (V_{B}) from the intermediate circuit voltage (V₀), the commutation contains an inductive energy storage device (L_{R}, S_{R}) that can be controlled in a clocked fashion by the control unit (ST) and a load reduction path (C_{R}, D₁, D₂, D₄) that is coupled to the controllable inductive energy storage device such that the rectifier output voltage (V_{B}) is set to zero in a first operating phase of the commutation quadrupole by activating the inductive energy storage device (L_{R}) and the semiconductor switches (S_{B1}-S_{B6}) of the rectifier are subsequently switched on in an idle fashion under the control of the control unit (ST), and **in that** the energy of the inductive energy storage device (L_{R}) is transferred into the capacitive energy storage means (C_{B1}-C_{B6}) in a second operating phase of the commutation quadrupole by means of a quasi-resonant transfer process along the load reduction path (C_{R}, D₁, D₂, D₄) in order to "gently" switch off the power semiconductors (S_{B1}-S_{B6}).

2. The welding or plasma cutting apparatus according to Claim 1, **characterized in that** the decoupling means comprise at least one decoupling diode (D₃).

3. The welding or plasma cutting apparatus according to Claim 1 or 2, **characterized in that** the controllable inductive energy storage device is formed by a serial connection of a controlled semiconductor switch (S_{R}) and an inductive resistor (L_{R}).

4. The welding or plasma cutting apparatus according to Claim 3, **characterized in that** the serial connection is arranged in a shunt arm of the commutation quadrupole.

5. The welding or plasma cutting apparatus according to one of the preceding claims, **characterized in that** the capacitive energy storage means are formed by capacitors (C_{B1}-C_{B6}) that are respectively arranged parallel to the controllable semiconductor switches (S_{B1}-S_{B6}) of the rectifier.

6. The welding or plasma cutting apparatus according to one of the preceding claims, **characterized in that** the load reduction path is formed by at least two diodes (D₁, D₂) that lie in another shunt arm of the commutation quadrupole, as well as by a capacitor (C_{R}) that is arranged between the common connecting point of the diodes and the common connecting point of the semiconductor switch (S_{R}) and the inductive resistor (L_{R}).

7. The welding or plasma cutting apparatus according to Claim 6, **characterized in that** the capacitor (C_{R}) is connected to the intermediate circuit via a coupling diode (D₄).

8. The welding or plasma cutting apparatus according to one of the preceding claims, **characterized in that** another inductive resistor (L₂) is arranged in series with one of the at least two diodes (D₂, D₁).

9. A method for operating a welding or plasma cutting apparatus comprising a rectifier that can be powered by a three-phase network (U, V, W) and is clocked by a control unit (ST), wherein the bridge arms of said rectifier which respectively contain controllable semiconductor switches (S_{B1}-S_{B6}) and power diodes (D_{B1}-D_{B6}) that are parallel connected to the semiconductor switches are respectively clocked separately such that sinusoidal currents flow in the a.c. voltage input of the rectifier and the intermediate circuit voltage (V₀) is maintained at a constant value, and wherein a commutation quadrupole connects the rectifier to a capacitive intermediate circuit that serves for supplying a welding current source (SCH) for the current of the welding process,
**characterized in that**
the rectifier output voltage (V_{B}) is set to zero in a first operating phase of the commutation quadrupole, in which it is decoupled from the intermediate circuit, by activating the inductive energy storage device (L_{R}) that can be controlled in a clocked fashion, **in that** the semiconductor switches (S_{B1}-S_{B6}) of the rectifier are subsequently switched on in an idle fashion under the control of the control unit (ST), and **in that** the energy of the inductive energy storage device (L_{R}) is transferred into the capacitive energy storage means (C_{B1}-C_{B6}) in a second operating phase of the commutation quadrupole by means of a quasi-resonant transfer process along the load reduction path (C_{R}, D₁, D₂, D₄) in order to "gently" switch off the power semiconductors (S_{B1}-S_{B6}).

## Revendications

1. Appareil de soudage ou de coupage au plasma comprenant un redresseur pouvant être alimenté par un réseau triphasé (U, V, W) et synchronisé par un appareil de commande (ST), dont les branches du pont présentent respectivement des commutateurs statiques (S_{B1}-S_{B6}) pouvant être activés séparément par l'appareil de commandes (ST) et des diodes de puissance (D_{B1}-D_{B6}) branchées parallèlement à ceux-ci, de telle sorte que des courants sinusoïdaux circulent dans l'entrée de tension alternative du redresseur et que la tension de circuit intermédiaire (V_{O}) est maintenue à une valeur constante, le redresseur étant relié par un quadripôle de commutation à un circuit intermédiaire capacitif, qui sert à l'alimentation d'une source de courant de soudage (SCH) pour le courant du processus de soudage,
**caractérisé en ce que** des moyens de stockage d'énergie (CB1-CB6) capacitifs sont disposés respectivement parallèlement aux commutateurs statiques (SB1-SB6) contrôlables du redresseur, **en ce que**, pour la commutation de la tension de sortie du redresseur (V_{B}) par la tension de circuit intermédiaire (V_{O}), il présente un accumulateur d'énergie (L_{R}, S_{R}) inductif et pouvant être activé de façon synchronisée par l'appareil de commande (S_{T}) et un chemin de décharge (C_{R}, D₁, D₂, D₄) couplé avec l'accumulateur d'énergie inductif et activable de telle sorte que, dans une première phase de fonctionnement du quadripôle de commutation, la tension de sortie du redresseur (V_{B}) est amenée à zéro par l'activation de l'accumulateur d'énergie (L_{R}) inductif, après quoi l'enclenchement, commandé par le dispositif de commande (ST), des commutateurs statiques (S_{B1}-S_{B6}) du redresseur s'effectue sans tension, et **en ce que**, dans une deuxième phase de fonctionnement du quadripôle de commutation, l'énergie de l'accumulateur d'énergie (L_{R}) inductif est transmise par une opération de transfert quasi résonante le long du chemin de décharge (C_{R}, D₁, D₂, D₄) dans les moyens capacitifs de stockage d'énergie (C_{B1}-C_{B6}), qui permettent à leur tour une déconnexion "souple" des semi-conducteurs de puissance (S_{B1}-S_{B6}).

2. Appareil de soudage ou de coupage au plasma selon la revendication 1,
**caractérisé en ce que** les moyens de découplage présentent au moins une diode de découplage (D₃).

3. Appareil de soudage ou de coupage au plasma selon la revendication 1 ou 2,
**caractérisé en ce que** l'accumulateur d'énergie inductif et activable est formé par le montage en série constitué d'un commutateur statique (S_{R}) commandé et d'une inductance (L_{R}).

4. Appareil de soudage ou de coupage au plasma selon la revendication 3,
**caractérisé en ce que** le montage en série est disposé dans une branche en dérivation du quadripôle de commutation.

5. Appareil de soudage ou de coupage au plasma selon l'une quelconque des revendications précédentes,
**caractérisé en ce que** les moyens capacitifs de stockage d'énergie sont formés par des condensateurs (C_{B1}-C_{B6}) disposés respectivement parallèlement aux commutateurs statiques (S_{B1}-S_{B6}) contrôlables du redresseur.

6. Appareil de soudage ou de coupage au plasma selon l'une quelconque des revendications précédentes,
**caractérisé en ce que** le chemin de décharge est formé par au moins deux diodes (D₁, D₂) situées dans une autre branche en dérivation du quadripôle de commutation et par un condensateur (C_{R}) disposé entre le point de raccordement commun des diodes et le point de raccordement commun de commutateurs statiques (S_{R}) et de l'inductance (L_{R}).

7. Appareil de soudage ou de coupage au plasma selon la revendication 6,
**caractérisé en ce que** le condensateur (C_{R}) est relié par une diode de couplage (D₄) au circuit intermédiaire.

8. Appareil de soudage ou de coupage au plasma selon l'une quelconque des revendications précédentes,
**caractérisé en ce qu'**une autre inductance (L₂) est disposée en série avec l'une des au moins deux diodes (D₂, D₁).

9. Procédé pour l'exploitation d'un appareil de soudage ou de coupage au plasma comprenant un redresseur alimenté par un réseau triphasé (U, V, W) et synchronisé par un appareil de commandes (ST), dont des branches de pont présentant des commutateurs statiques (S_{B1}-S_{B6}) activables et des diodes de puissance (D_{B1}-D_{B6}) branchées en parallèle avec ces interrupteurs sont synchronisées respectivement séparément de telle sorte que des courants sinusoïdaux circulent dans l'entrée de tension alternative du redresseur et la tension du circuit intermédiaire (V_{O}) est maintenue à une valeur constante, le redresseur étant relié par un quadripôle de commutation à un circuit intermédiaire capacitif, qui sert à l'alimentation d'une source de courant de soudage (SCH) pour le courant du procédé de soudage,
**caractérisé en ce que**, dans une première phase de fonctionnement du quadripôle de commutation découplé du circuit intermédiaire par une diode (D₃), la tension de sortie de redresseur (V_{B}) est guidée vers zéro par l'activation d'un accumulateur d'énergie (L_{R}) inductif, activable et synchronisé, après quoi la mise en fonctionnement, contrôlée par le dispositif de commande (ST), des commutateurs statiques (SB₁-SB₆) du redresseur s'effectue sans tension, et **en ce que**, dans une seconde phase d'exploitation du quadripôle de commutation, l'énergie de l'accumulateur d'énergie (L_{R}) inductif est transmise par une opération de transfert quasi-résonante le long d'un chemin de décharge (C_{R}, D₁, D₂, D₄) dans des moyens capacitifs de stockage d'énergie (C_{B1}-C_{B6}) disposés parallèlement aux commutateurs statiques (SB1-SB6) contrôlables du redresseur, lesquels moyens permettent à leur tour une déconnexion "souple" des interrupteurs de puissance (S_{B1}-S_{B6}).
